# FASCICULE DE BREVET EUROPEEN

(11) **EP 0 422 993 B1**
(45) Date de publication et mention de la délivrance du brevet: **25.08.1993**
(21) Numéro de dépôt: 90402741.4
(22) Date de dépôt: 03.10.1990
(51) Int. Cl.: B23K 9/028, B23K 9/32

(54) **Procédé et appareil de soudage à l'arc électrique d'un joint circulaire ou analogue à axe horizontal**
Verfahren und Vorrichtung zum elektrischen Lichtbogenschweissen einer kreisförmigen Verbindung oder dergleichen mit einer horizontalen Achse
Method and apparatus for electric arc welding a circular joint or the like with a horizontal axis

(30) Priorité: 10.10.1989 FR 8913211
(43) Date de publication de la demande: 17.04.1991
(73) Titulaire: FRAMATOME, 92400 Courbevoie (FR)
(72) Inventeur: Gentric, Alain, F-71100 Chalon sur Saone (FR)
(74) Mandataire: Jacobson, Claude

(56) Documents cités:
- EP-A- 0 024 438

## Description

La présente invention est relative au soudage à l'arc électrique d'un joint à souder de forme circulaire ou analogue à axe à peu près horizontal au moyen d'une torche de soudage à électrode tournante. Elle s'applique en particulier au soudage bout à bout des tubes sur la plaque tubulaire d'un échangeur de chaleur.

Les tubes à souder sur la plaque tubulaire d'un échangeur de chaleur peuvent avoir une longueur importante, de l'ordre de 30 mètres, ce qui oblige à faire la soudure des deux éléments à raccorder avec l'axe du tube en position horizontale.

L'invention a pour but de permettre l'obtention sur toute la périphérie du joint d'un profil constant du cordon de soudure malgré la faible tension superficielle du bain de fusion.

A cet effet, l'invention a pour objet un procédé de soudage à l'arc électrique, au moyen d'une torche de soudage à électrode tournante, d'un joint à souder de forme circulaire ou analogue à axe à peu près horizontal, du gaz de soudage étant amené dans la région de l'électrode tournante et du gaz de protection envers de l'autre côté du joint, caractérisé en ce qu'on fait varier en fonction de la position angulaire de l'électrode tournante la différence de pressions de gaz entre l'intérieur et l'extérieur du joint, cette différence de pressions de gaz étant maximale lorsque l'électrode tournante est dirigée vers le haut et minimale lorsque'elle est dirigée vers le bas.

L'invention a également pour objet, pour la mise en oeuvre d'un tel procédé, un appareil de soudage à l'arc électrique d'un joint à souder de forme circulaire ou analogue à axe à peu près horizontal, du type comprenant une torche de soudage à électrode tournante munie de moyens d'amenée de gaz de soudage dans la région de l'électrode tournante, et des moyens d'amenée d'un gaz de protection envers de l'autre côté du joint, caractérisé en ce qu'il comprend des moyens pour faire varier la pression différentielle entre le gaz de soudage et le gaz de protection envers en fonction de la position angulaire de l'électrode.

Des exemples de mise en oeuvre de l'invention vont maintenant être décrits en regard du dessin annexé, sur lequel :
- la Fig. 1 est une vue schématique, partiellement en coupe, d'un appareil de soudage conforme à l'invention ; et
- la Fig. 2 est une vue analogue d'une variante.

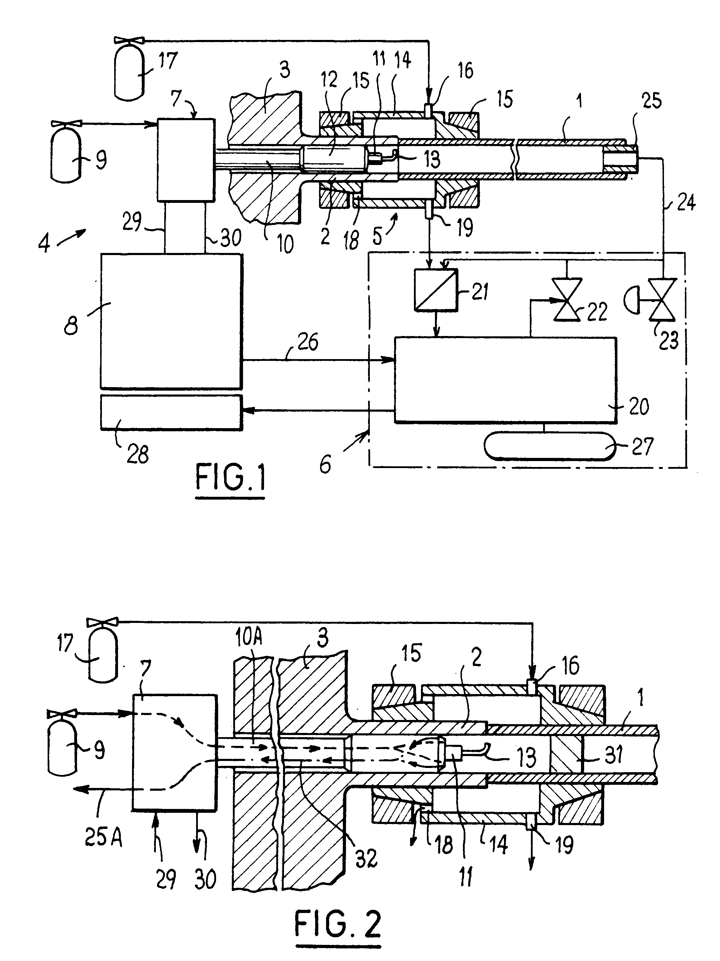

L'appareil représenté à la Fig. 1 est destiné à fixer la tranche d'extrémité d'un tube 1 relativement court, par exemple d'une longueur de l'ordre de 1 mètre, sur celle d'un collet 2 en saillie sur une plaque tubulaire 3. Il comprend un ensemble de soudage 4, un dispositif 5 de protection envers du joint, et un dispositif de régulation 6.

L'ensemble de soudage 4 comprend un pistolet 7 commandé par un automate et relié à une source de gaz de soudage 9. Ce pistolet comprend une torche de soudage TIG (Tungsten Inert Gas) 10 munie d'une tête rotative motorisée 11 et de moyens 12 de positionnement à joint étanche dans le collet 2. La tête 11 comporte une électrode coudée 13 qui, en service, est orientée à peu près radialement par rapport à l'axe des deux éléments tubulaires 1 et 2 et se trouve à peu près en regard du joint soudé circulaire à réaliser pour solidariser ces deux éléments.

Le dispositif de protection envers 5 comprend un manchon 14 adapté pour être enfilé sur le tube 1 et sur le collet 2, à cheval sur le joint à réaliser, et pour être maintenu dans cette position grâce à deux colliers d'extrémité 15, qui assurent l'étanchéité entre le manchon, le tube et le collet. Le manchon 14 possède une entrée 16 reliée à une source 17 de gaz de protection envers, une sortie de gaz calibrée 18, et une prise de pression 19.

Le dispositif de régulation 6 comprend un régulateur 20, un capteur de pression différentielle 21, une vanne régulée 22 et une soupage tarée de sécurité 23. Le capteur 21 et les deux vannes sont reliés via une conduite 24 à un embout creux 25 disposé à l'extrémité libre du tube 1. Le capteur 21 est en outre relié par une deuxième entrée à la prise de pression 19 du manchon 14, et il émet en sortie, vers le régulateur 20, un signal représentatif de la différence entre les deux pressions mesurées. A partir de ce signal et d'un signal de pression différentielle de consigne reçu par une ligne 26 de l'automate 8, le régulateur règle le débit de la vanne 22 pour annuler le signal fourni par le capteur 21. La pression différentielle mesurée peut être affichée sur un écran 27 et enregistrée sur un enregistreur 28.

Les paramètres de soudage (vitesse de rotation de la tête de torche 11, caractéristiques du courant électrique) sont programmés dans l'automate 8, de façon classique, et sont imposés à la torche via une ligne 29. En outre, cet automate contient un programme qui définit la pression différentielle entre les deux gaz en fonction de la position angulaire de la tête de torche, et c'est ce signal qu'il envoie au régulateur 20 via la ligne 26. Cette position angulaire est captée par le pistolet 7, et un signal correspondant est envoyé à l'automate, via une ligne 30.

En service, les sources 9 et 17 fournissent les deux gaz à un débit constant préréglé. Le débit de gaz de protection envers s'échappant du manchon 14 via la sortie 18 est également constant, et il en donc de même de la pression de ce gaz. Le régulation de la pression différentielle consiste donc en une régulation de la pression du gaz de soudage, laquelle s'effectue par simple régulation du débit s'échappant à travers la vanne 22, comme décrit plus haut.

En pratique, le programme de variation de pression peut consister en une série d'un nombre limité de valeurs de pression (par exemple une dizaine de valeurs) correspondant à autant de positions angulaires de la tête de torche, avec une valeur minimale de pression lorsque l'électrode est dirigée vers la génératrice inférieure du joint soudé circulaire à réaliser et une valeur maximale lorsque l'électrode est dirigée vers la génératrice supérieure de ce joint. La surpression du gaz de soudage peut être par exemple de 10 mbars lorsque l'électrode est tournée vers le haut et de 5 mbars lorsqu'elle est tournée vers le bas, avec une pression relative du gaz de protection envers constante et égale à 1 mbar environ.

Lorsque le soudage s'effectue en courant électrique pulsé, le signal fourni par le capteur 21 est filtré par le régulateur 20 avant son traitement.

L'appareil de la Fig. 1 convient bien lorsque le volume de gaz de soudage contenu dans le tube 1 est relativement faible. Par contre, dans le cas du soudage de tubes de grande longueur, qui mesurent par exemple environ 30 mètres de long, les pertes de charge dans le tube ainsi que les phénomènes dynamiques rendent difficile le réglage précis de la manière décrite plus haut de la pression du gaz de soudage au voisinage de l'électrode. De plus, les tubes d'un générateur de vapeur étant très nombreux, une erreur peut se produire lors du positionnement de l'embout 25.

Il est alors préférable d'avoir recours à la variante de la Fig. 2, qui diffère de la précédente par les points suivants :
- l'embout 25 est supprimé, et un bouchon hermétique 31 est positionné dans le tube 1, à une petite distance au-delà du joint à réaliser, à travers la plaque tubulaire 3, avant l'introduction de la torche de soudage ;
- la torche 10A comporte non seulement, comme précédemment, des conduits d'amenée du gaz de soudage dans la région de l'électrode, mais également des conduits 32 d'évacuation de ce gaz, lesquels débouchent dans la ligne 25A d'évacuation à laquelle sont reliés les éléments 21 à 23, comme à la Fig. 1, ce du côté de la plaque tubulaire opposée au tube 1. Le capteur de pression différentielle 21 est également relié à la prise de pression 19 comme précédemment.

Le fonctionnement de l'appareil de la Fig. 2 est le même que celui décrit plus haut. Le faible volume de gaz de soudage délimité grâce au bouchon 31 permet d'obtenir la même précision de réglage de pression, et le même temps de réponse, quelle que soit la longueur du tube 1.

## Revendications

1. Procédé de soudage à l'arc électrique, au moyen d'une torche de soudage (10, 10A) à électrode tournante (13), d'un joint à souder de forme circulaire ou analogue à axe à peu près horizontal, du gaz de soudage étant amené dans la région de l'électrode tournante (13) et du gaz de protection envers de l'autre côté du joint, caractérisé en ce qu'on fait varier en fonction de la position angulaire de l'électrode tournante (13) la différence de pressions de gaz entre l'intérieur et l'extérieur du joint, cette différence de pressions de gaz étant maximale lorsque l'électrode tournante (13) est dirigée vers le haut et minimale lorsqu'elle est dirigée vers le bas.

2. Procédé suivant la revendication 1, caractérisé en ce qu'on maintient constante la pression du gaz de protection envers, et l'on fait varier la pression du gaz de soudage en fonction de la position angulaire de l'électrode.

3. Procédé suivant l'une des revendications 1 et 2, caractérisé en ce qu'on délimite autour de l'électrode (13), de part et d'autre du joint, un volume relativement réduit dans lequel on régule la pression du gaz de soudage.

4. Procédé suivant la revendication 3, pour la fixation bout à bout d'un premier élément tubulaire (1) relativement court à un second élément tubulaire (2), caractérisé en ce qu'on introduit de façon étanche la torche de soudage (10) dans le second élément tubulaire (2), on évacue le gaz de soudage par l'extrémité libre du premier élément tubulaire (1), et on régule le débit du gaz de soudage évacué.

5. Procédé suivant la revendication 3, pour la fixation bout à bout d'un premier élément tubulaire (1) à un second élément tubulaire (2), caractérisé en ce qu'on introduit un bouchon hermétique (31) dans le premier élément tubulaire (1), d'un côté du joint, on introduit la torche de soudage (10A) dans le second élément tubulaire (2), de l'autre côté du joint, on évacue le gaz de soudage du côté de la torche, et on régule le débit du gaz de soudage évacué.

6. Appareil de soudage à l'arc électrique d'un joint à souder de forme circulaire ou analogue à axe à peu près horizontal, du type comprenant une tête de soudage (10; 10A) à électrode tournante (13) munie de moyens d'amenée de gaz de soudage dans la région de l'électrode tournante (13), et des moyens (14, 17) d'amenée d'un gaz de protection envers de l'autre côté du joint, caractérisé en ce qu'il comprend des moyens (6, 8) pour faire varier la pression différentielle entre le gaz de soudage et le gaz de protection envers en fonction de la position angulaire de l'électrode (13).

7. Appareil suivant la revendication 6, caractérisé en ce qu'il comprend des moyens (16 à 18) pour maintenir constante la pression du gaz de protection envers, et des moyens (20, 22) pour faire varier la pression du gaz de soudage en fonction de la position angulaire de l'électrode (13).

8. Appareil suivant la revendication 7, caractérisé en ce qu'il comprend des moyens (25 ; 31) pour délimiter un volume relativement réduit autour de l'électrode, de part et d'autre du joint.

9. Appareil suivant la revendication 8, pour la fixation bout à bout d'un premier élément tubulaire (1) relativement court à un second élément tubulaire (2), caractérisé en ce que la torche (10) comprend des moyens de positionnement étanche dans le second élément tubulaire (2), et en ce qu'il est prévu des moyens (20, 22) de régulation du débit de gaz de soudage évacué par l'extrémité libre du premier élément tubulaire (1).

10. Appareil suivant la revendication 8, pour la fixation bout à bout d'un premier élément tubulaire (1) à un second élément tubulaire (2), caractérisé en ce qu'il comprend un bouchon (31) destiné à être positionné hermétiquement dans le premier élément tubulaire (1) d'un côté du joint, en ce que la torche (10A) comprend des moyens de positionnement dans le second élément tubulaire (2) et des moyens (32) permettant l'évacuation du gaz de soudage de son côté, et en ce qu'il est prévu des moyens de régulation du débit de gaz de soudage évacué.

## Claims

1. Process for electric-arc welding, by means of a welding torch (10,10A) with a rotating electrode (13), of a circular or similar joint to be welded, having a substantially horizontal axis, welding gas being supplied to the region of the rotating electrode (13) and reverse-side protective gas being supplied to the other side of the joint, characterised in that, according to the angular position of the rotating electrode (13), the difference in gas pressures between the inside and the outside of the joint is varied, this difference in gas pressures being at a maximum when the rotating electrode (13) is directed upwards and at a minimum when it is directed downwards.

2. Process according to claim 1, characterised in that the pressure of the reverse-side protective gas is kept constant and the pressure of the welding gas is varied according to the angular position of the electrode.

3. Process according to claim 1 or 2, characterised in that a relatively small volume, in which the pressure of the welding gas is regulated, is delimited around the electrode (13), on both sides of the joint.

4. Process according to claim 3, for the end-to-end fixing of a relatively short first tubular element (1) to a second tubular element (2), characterised in that the welding torch (10) is introduced into the second tubular element (2) in a sealed manner, the welding gas is exhausted via the free end of the first tubular element (1), and the flow of the welding gas exhausted is regulated.

5. Process according to claim 3, for the end-to-end fixing of a first tubular element (1) to a second tubular element (2), characterised in that a hermetic plug (31) is introduced into the first tubular element (1), on one side of the joint, the welding torch (10A) is introduced into the second tubular element (2), on the other side of the joint, the welding gas is exhausted on the torch side, and the flow of the welding gas exhausted is regulated.

6. Apparatus for electric arc welding a circular or similar joint to be welded, having a substantially horizontal axis, of the type comprising a welding head (10;10A) with a rotating electrode (13) equipped with means for supplying welding gas into the region of the rotating electrode (13), and means (14,17) for supplying a reverse-side protective gas to the other side of the joint, characterised in that it comprises means (6,8) for varying the differential pressure between the welding gas and the reverse-side protective gas according to the angular position of the electrode (13).

7. Apparatus according to claim 6, characterised in that it comprises means (16 to 18) for keeping the pressure of the reverse-side protective gas constant, and means (20,22) for varying the pressure of the welding gas according to the angular position of the electrode (13).

8. Apparatus according to claim 7, characterised in that it comprises means (25;31) for delimiting a relatively reduced volume around the electrode, on both sides of the joint.

9. Apparatus according to claim 8, for the end-to-end fixing of a relatively short first tubular element (1) to a second tubular element (2), characterised in that the torch (10) comprises means of leaktight positioning in the second tubular element (2), and in that means (20,22) are provided for the regulation of the flow of welding gas exhausted via the free end of the first tubular element (1).

10. Apparatus according to claim 8, for the end-to-end fixing of a first tubular element (1) to a second tubular element (2), characterised in that it comprises a plug (31) intended to be positioned hermetically in the first tubular element (1) on one side of the joint, in that the torch (10A) comprises means for positioning in the second tubular element (2) and means (32) for exhausting the welding gas on its side, and in that means are provided for regulating the flow of welding gas exhausted.

## Patentansprüche

1. Verfahren zum elektrischen Lichtbogenschweißen einer kreisförmig oder analog zu schweißenden Verbindung mit ungefähr horizontaler Achse mit Hilfe einer Schweißfackel (10, 10A) mit rotierender Elektrode (33), wobei Schweißgas in den Bereich der rotierenden Elektrode (13) und Gas zum Schutz der Rückseite auf der anderen Seite der Verbindung zugeführt wird,
dadurch **gekennzeichnet,** daß
die Differenz der Gasdrücke zwischen dem Inneren und dem Äußeren der Verbindung in Abhängigkeit von der Winkelposition der rotierenden Elektrode (13) geändert wird, wobei diese Gasdruckdifferenz maximal ist, wenn die rotierende Elektrode (13) nach oben gerichtet ist, und minimal ist, wenn diese nach unten gerichtet ist.

2. Verfahren nach Anspruch 1,
dadurch gekennzeichnet, daß
der Druck des Rückseitenschutzgases konstant gehalten und der Druck des Schweißgases in Abhängigkeit von der Winkelposition der Elektrode geändert wird.

3. Verfahren nach einem der Ansprüche 1 oder 2,
dadurch gekennzeichnet,
daß um die Elektrode (13) herum auf beiden Seiten der Verbindung ein relativ kleines Volumen begrenzt wird, in dem der Druck des Schweißgases geregelt wird.

4. Verfahren nach Anspruch 3, zur Kopf-an-Kopf-Befestigung eines ersten relativ kurzen rohrförmigen Elements (1) an einem zweiten rohrförmigen Element (2),
dadurch gekennzeichnet, daß
die Schweißfackel (10) luftdicht in das zweite rohrförmige Element (2) eingeführt wird, daß das Schweißgas durch das freie Ende des ersten rohrförmigen Elements (1) abgeführt wird und daß der Durchsatz des abgeführten Schweißgases geregelt wird.

5. Verfahren nach Anspruch 3, zur Kopf-an-Kopf-Befestigung eines ersten rohrförmigen Elements (1) an einem zweiten rohrförmigen Element (2),
dadurch gekennzeichnet, daß
ein luftdichter Stopfen (31) in das erste rohrförmige Element (1) auf einer Seite der Verbindung eingeführt wird, daß die Schweißfackel (10A) in das zweite rohrförmige Element (2) auf der anderen Seite der Verbindung eingeführt wird, daß das Schweißgas auf der Seite der Fackel abgeführt und daß der Durchsatz des abgeführten Schweißgases geregelt wird.

6. Vorrichtung zum elektrischen Lichtbogenschweißen einer kreisförmig oder analog zu schweißenden Verbindung oder dergleichen mit einer ungefähr horizontalen Achse, mit einem Schweißkopf (10; 10A), der eine rotierende Elektrode (13) umfaßt und mit Einrichtungen zur Zufuhr von Schweißgas in den Bereich der rotierenden Elektrode (13) und Einrichtungen (14, 17) zur Zufuhr von Gas zum Schutz der Rückseite an die andere Seite der Verbindung Versehen ist,
gekennzeichnet durch
Einrichtungen (6, 8) zum Verändern der Druckdifferenz zwischen dem Schweißgas und dem Rückseitenschutzgas in Abhängigkeit von der Winkelposition der Elektrode (13).

7. Vorrichtung nach Anspruch 6,
gekennzeichnet durch
Einrichtungen (16 - 18) zum Konstanthalten des Drucks des Rückseitenschutzgases und Einrichtungen (20, 22) zum Verändern des Drucks des Brenngases in Abhängigkeit von der Winkelposition der Elektrode (13).

8. Vorrichtung nach Anspruch 7,
gekennzeichnet durch
Einrichtungen (25; 31) zum Begrenzen eines relativ kleinen Volumens um die Elektrode auf beiden Seiten der Verbindung.

9. Vorrichtung nach Anspruch 8, zur Kopf-an-Kopf-Befestigung eines ersten relativ kurzen rohrförmigen Elements (1) an einem zweiten rohrförmigen Element (2),
dadurch gekennzeichnet, daß
die Fackel (10) Einrichtungen zur luftdichten Positionierung im zweiten rohrförmigen Element (2) umfaßt und daß Einrichtungen (20, 22) zur Regelung des Durchsatzes von abgeführtem Schweißgas am freien Ende des ersten rohrförmigen Elements (1) vorgesehen sind.

10. Vorrichtung nach Anspruch 8, zur Kopf-an-Kopf-Befestigung eines ersten rohrförmigen Elements (1) an einem zweiten rohrförmigen Element (2),
gekennzeichnet durch
einen Stopfen (31), der dazu bestimmt ist, hermetisch im ersten rohrförmigen Element (1) auf einer Seite der Verbindung positioniert zu werden, und dadurch, daß die Fackel (10A) Einrichtungen zur Positionierung im zweiten rohrförmigen Element (2) und Einrichtungen (32) zur Abführung des Schweißgases auf dessen Seite umfaßt und daß Einrichtungen zur Regelung des Durchsatzes des abgeführten Schweißgases vorgesehen sind.
